# EUROPÄISCHE PATENTSCHRIFT

(11) **EP 0 580 054 B1**
(45) Veröffentlichungstag und Bekanntmachung des Hinweises auf die Patenterteilung: **27.11.1996**
(21) Anmeldenummer: 93111123.1
(22) Anmeldetag: 12.07.1993
(51) Int. Cl.: C08F 220/28, C09D 133/14, C08G 63/00, C08G 18/42, C08G 18/62, C09D 175/06

(54) **Verfahren zur Herstellung von Polyhydroxylverbindungen und ihre Verwendung in Lacken**
Process for preparing polyhydroxy compounds and their use in paints
Procédé de préparation de composés polyhydroxyliques et leur usage dans des peintures

(30) Priorität: 23.07.1992 DE 4224365
(43) Veröffentlichungstag der Anmeldung: 26.01.1994
(73) Patentinhaber: BAYER AG, 51368 Leverkusen (DE)
(72) Erfinder: Hovestadt, Wieland, Dr., D-47802 Krefeld (DE); Ruttmann, Gerhard, D-51399 Burscheid (DE); Brahm, Martin, Dr., D-51766 Engelskirchen (DE); Blum, Harald, Dr., D-47669 Wachtendonk (DE); Meixner, Jürgen, Dr., D-47803 Krefeld (DE); Wamprecht, Christian, dr., D-41472 Neuss (DE)

(56) Entgegenhaltungen:
- EP-A- 0 044 393
- US-A- 3 405 162
- US-A- 3 892 714
- US-A- 4 082 816

## Beschreibung

Die Erfindung betrifft ein neues Verfahren zur Herstellung von organischen Polyhydroxylverbindungen durch Polymerisation olefinisch ungesättigter Monomerer, die zumindest in untergeordnetem Umfang aus Hydroxylgruppen aufweisenden Monomeren bestehen, in Gegenwart von cyclischen, zu Polymerisationsreaktionen befähigten Verbindungen und von niedermolekularen mehrwertigen Alkoholen, die nach diesem Verfahren erhaltenen Polyhydroxylverbindungen und ihre Verwendung als Bindemittelkomponente in Ein- oder Zweikomponenten-Lacken, insbesondere Ein- oder Zweikomponenten-Polyurethanlacken.

Aus ökologischen Gründen sollte die Lösungsmittelemission bei der Applikation von Beschichtungsmitteln möglichst gering gehalten werden. Aus diesem Grund wurden in letzter Zeit viele festkörperreiche Systeme entwickelt, die im Idealfall jedoch lösungsmittelfrei sein sollten.

Ester-modifizierte Polyhydroxypolyacrylate stellen bezüglich ihrer lacktechnischen Eigenschaften wertvolle Bindemittelkomponenten dar, die in Kombination mit organischen Polyisocyanaten als Bindemittel eingesetzt zu Beschichtungen einer hohen Chemikalienbeständigkeit, Härte und auch Flexibilität verarbeitet werden können (US-A-3 892 714, 3 405 162). Die Herstellung von Ester-modifizierten Polyhydroxypolyacrylaten durch deren Umsetzung mit cyclischen Estern, insbesondere Lactonen, ist beispielsweise in EP-A-0 339 472 und EP-A-O 339 477 beschrieben. Gemäß US-A-4 082 816 erfolgt die Herstellung der Ester-modifizierten Copolymerisate in einer Eintopf-Reaktion in Lösungsmitteln, die jedoch keine Hydroxylgruppen aufweisen dürfen.Gemäß PCT-Anmeldung WO 90/03991 wird diese Reaktion lösungsmittelfrei durchgeführt, wobei Polyhydroxylverbindungen resultieren, die als Bindemittelkomponente in Pulverlacken oder lösungsmittelhaltigen Lacken Verwendung finden können.

Allen diesen Verfahren des Standes der Technik gemeinsam ist der Nachteil, daß die als Verfahrensprodukte anfallenden, Estergruppen aufweisenden Polyhydroxylverbindungen im allgemeinen eine zur Herstellung von lösungsmittelfreien oder -armen Beschichtungsmitteln zu hohe Viskosität aufweisen. Es war daher die der Erfindung zugrunde liegende Aufgabe, ein Verfahren zur Verfügung zu stellen, welches die Herstellung von modifizierten, insbesondere Ester-modifizierten Polyhydroxypolyacrylaten gestattet, die bezüglich ihrer lacktechnischen Eigenschaften den Produkten des Standes der Technik vergleichbar sind, sich von diesen jedoch vorteilhaft durch eine wesentlich niedrigere Viskosität unterscheiden.

Diese Aufgabe konnte mit dem nachstehend näher beschriebenen erfindungsgemäßen verfahren gelöst werden, bei welchem als Komponente c) niedermolekulare mehrwertige Alkohole mitverwendet werden, die sowohl in unmodifizierter Form (keine Reaktion mit der Komponente b)) als auch in durch Reaktion mit der Komponente b) modifizierter Form reaktive Verdünner darstellen, die zu einer wesentlichen Viskositätserniedrigung des Gesamtsystems führen. Die erfindungsgemäß aufgefundene Möglichkeit einer wesentlichen Viskositätserniedrigung der Verfahrensprodukte durch Mitverwendung der Ausgangskomponenten c) war nicht vorhersehbar, insbesondere da in den einschlägigen Vorveröffentlichungen des Standes der Technik davon abgeraten wird, Hydroxylgruppen aufweisende Lösungsmittel, d. h. außer den Hydroxylgruppen aufweisenden Monomeren andere alkoholische Komponenten mitzuverwenden.

Gegenstand der Erfindung ist ein Verfahren zur Herstellung von Polyhydroxylverbindungen mit einem Hydroxylgruppengehalt von 2 bis 10 Gew.-% und einer Viskosität bei 23°C von 250 bis 80 000 mPa.s durch radikalisch initiierte Polymerisation von
a) einem Gemisch olefinisch ungesättigter Monomerer, welches zumindest zu 1 Gew.-% aus alkoholische Hydroxylgruppen aufweisenden Monomeren besteht und in einer Gesamtmenge von 100 Gew.-Teilen zum Einsatz gelangt, in Gegenwart von
b) cyclischen Verbindungen, die in Gegenwart von alkoholische Hydroxylgruppen aufweisenden Verbindungen als Starter im Sinne einer ringöffnenden Polymerisationsreaktion reagieren können, und die zu Beginn und gegebenenfalls zusätzlich im Verlauf der Reaktion in einer Gesamtmenge von 5 bis 500 Gew.-Teilen zum Einsatz gelangen,
bei einer Reaktionstemperatur von 80 bis 220°C, dadurch gekennzeichnet, daß man die Umsetzung in Gegenwart von
c) mehrwertigen Alkoholen des Molekulargewichtsbereichs 62 bis 1000, die zu Beginn und gegebenenfalls zusätzlich im Verlauf der Reaktion in einer Gesamtmenge von 2 bis 300 Gew.-Teilen zum Einsatz gelangen,
durchführt.

Gegenstand der Erfindung sind auch die nach diesem Verfahren erhaltenen Polyhydroxylverbindungen.

Gegenstand der Erfindung ist auch die Verwendung der nach diesem Verfahren erhaltenen Polyhydroxylverbindungen, gegebenenfalls nach zumindest teilweiser Überführung der Hydroxylgruppen in Acetessigestergruppen und/oder gegebenenfalls zusammen mit anderen Hydroxylgruppen aufweisenden Verbindungen, in Kombination mit geeigneten Härtern als Bindemittel für Ein- oder Zweikomponenten-Lacke.

Bei den Monomeren a) handelt es sich um Gemische aus
a1) 1 - 70 Gew.-%, vorzugsweise 5 - 50Gew.-%, alkoholische Hydroxylgruppen aufweisende Monomeren
a2) 30 - 99 Gew.-%, vorzugsweise 45 - 95 Gew.-%, Hydroxyl- und Carboxylgruppen-freien Monomeren
a3) 0 - 20 Gew.-%, vorzugsweise 0 - 5 Gew.-%, Säuregruppen aufweisende Monomeren.

Geeignete Monomere der Gruppe al) sind insbesondere Hydroxyalkylester α,β-ungesättigter Carbonsäuren, insbesondere von Acrylsäure oder Methacrylsäure mit 2 bis 12, vorzugsweise 2 bis 6, Kohlenstoffatomen im Hydroxyalkylrest. Beispielhaft genannt seien 2-Hydroxyethylacrylat, 2-Hydroxypropylacrylat, 1-Hydroxymethylethylacrylat, 2-, 3- und 4-Hydroxybutylacrylat, die isomeren Hydroxyhexylacrylate, und die diesen Acrylaten entsprechenden Methacrylate. Ebenfalls geeignet sind mit Ethylen-, Propylen- und/oder Butylenoxid modifizierte bzw. kettenverlängerte hydroxyfunktionelle Monomere eines maximalen Molekulargewichts von 376.

Monomere der Gruppe a2) sind insbesondere einfach olefinisch ungesättigte Verbindungen des Molekulargewichtsbereichs 53 - 400, vorzugsweise 80 bis 220. Hierzu gehören beispielsweise Acrylsäure- oder Methacrylsäure-alkylester oder -cycloalkylester mit 1 bis 18, vorzugsweise 1 bis 8, Kohlenstoffatomen im Alkyl-bzw. Cycloalkylrest wie beispielsweise Methyl-, Ethyl-, n-Propyl-, n-Butyl-, Isopropyl-, Isobutyl-, t-Butyl-, die isomeren Pentyl-, Hexyl-, Octyl-, Dodecyl-, Hexadecyl- oder Octadecylester der genannten Säuren, Acetoacetoxyethylmethacrylat, Acrylnitril, Vinylether, Methacrylnitril, Vinylacetat, Styrol, Vinyltoluol oder beliebige Gemische derartiger und anderer Monomerer.

Zu den gegebenenfalls mitzuverwendenden Monomeren der Gruppe a3) gehören beispielsweise carboxylgruppenhaltige, ungesättigte Monomere wie beispielsweise Acrylsäure, Methacrylsäure, Itaconsäure, Crotonsäure und Halbester der Malein- und Fumarsäure sowie deren Mischungen.

Bei den cyclischen Verbindungen b) handelt es sich um beliebige Verbindungen des Molekulargewichtsbereichs 72 bis 439, die in Gegenwart von alkoholischen Hydroxylgruppen als Starter einer ringöffnenden Polymerisationsreaktion zugänglich sind. Beispiele solcher Verbindungen sind Lactone, wie β-Propiolacton, β-Butyrolacton γ-Butyrolacton, γ-Valerolacton, Pivalolacton, ε-Caprolacton und substituierte Lactone, wie Methyl-, Ethyl-, Propyl-, Dodecyl-ε-caprolacton, Dialkyllactone, Trialkyllactone, Cyclohexyl-ε-caprolacton, Phenyl-ε-caprolacton, Methoxy-ε-caprolacton, Ethoxy-ε-caprolacton, außerdem cyclische Carbonate, wie Ethylencarbonat, Propylencarbonat, Neopentylglykolcarbonat und Epoxide, wie 2-Ethylhexylglycidylether, Phenylglycidylether, Glycidylester der Versaticsäure oder beliebige Gemische derartiger cyclischer Verbindungen. Bevorzugt eingesetzt werden Lactone, besonders bevorzugt ε-Caprolacton.

Bei den niedermolekularen mehrwertigen Alkoholen (c) handelt es sich um solche des Molekulargewichtsbereichs 62 bis 1000, vorzugsweise 62 bis 286. Beispielhaft genannt seien Ethylenglykol, Diethylenglykol, Triethylenglykol, 1,2-Propandiol, Tripropylenglykol, 1,3-Propandiol, 1,2-Butandiol, 1,3-Butandiol, 1,4-Butandiol, 2,3-Butandiol, 1,5-Pentandiol, 2,2-Dimethyl-1,3-propandiol, 1,6-Hexandiol, 2,5-Hexandiol, 2-Methyl-2,4-pentandiol, Octandiol, 2-Ethyl-1,3-hexandiol, Hexandecandiol, Octadecandiol, Glycerin, 1,2,6-Hexantriol oder Mischungen hieraus. Bevorzugt sind Diole, welche bei Raumtemperatur flüssig sind und einen Siedepunkt oberhalb der Polymerisationstemperatur besitzen, wie 1,3-Butandiol oder 2-Ethyl-1,3-hexandiol. Ebenfalls als Komponente c) geeignet sind Ethergruppen aufweisende mehrwertige Alkohole des genannten Molekulargewichtsbereichs, die durch Alkoxylierung von Ethergruppen-freien mehrwertigen Alkoholen der beispielhaft genannten Art unter Verwendung von Ethylenoxid und/oder Propylenoxid in an sich bekannter Weise zugänglich sind.

Das erfindungsgemäße Verfahren wird vorzugsweise in Gegenwart von solchen Radikalbildnern d) als Polymerisationsinitiatoren durchgeführt, die für die nachstehend genannten Reaktionstemperaturen beim erfindungsgemäßen Verfahren geeignet sind. Beispielhaft genannt seien Dibenzoylperoxid, Di-tert.-butylperoxid, Dilaurylperoxid, tert.-Butylperoctoat, tert.-Butylperoxymaleinat, tert.-Butylperoxybenzoat, Dicumylperoxid, Didecanoylperoxid, wie Azoverbindungen, z.B. 2,2'-Azobis(2,4-dimethylvaletonitril), 2,2'-Azobis(isobutyronitril), 2,2-Azobis-(2,3-dimethylbutyronitril), 1,1'-Azobis-(1-cyclohexannitril).

Pro 100 Gew.-Teilen der insgesamt zum Einsatz gelangenden monomeren Mischung a) werden bei der Durchführung des erfindungsgemäßen Verfahrens insgesamt 5 bis 500, vorzugsweise 10 bis 200, Gew.-Teile der Verbindungen b), insgesamt 2 bis 300, vorzugsweise 4 bis 100, Gew.-Teile der Verbindungen c) und insgesamt 0,5 bis 50, vorzugsweise 2 bis 20, Gew.-Teile der Initiatoren d) eingesetzt.

Bei der Durchführung des erfindungsgemäßen Verfahrens werden im allgemeinen mindestens 20, vorzugsweise 50 bis 100 Gew.-% der Gesamtmenge der Komponente b) und/oder mindestens 20, vorzugsweise 50 bis 100 Gew.-% der Gesamtmenge der Komponente c) im Reaktionsgefäß vorgelegt und die jeweiligen Restmengen zusammen oder parallel mit den Monomeren a) im Verlauf der Reaktion zudosiert.

Neben den obengenannten Ausgangsmaterialien und Hilfsmitteln können bei der erfindungsgemäßen Umsetzung gegebenenfalls molekulargewichtsregelnde Substanzen wie n-Dodecylmercaptan, tert.-Dodecylmercaptan o. dergl. in Mengen von bis zu 10 Gew.-%, bezogen auf Gesamtgewicht des Reaktionsgemisches mitverwendet werden.

Oftmals ist auch die Mitverwendung von Katalysatoren für die ringöffnende Polymerisationsreaktion der Komponenten b) angezeigt, die in Mengen von bis zu 0,8 Gew.-%, bezogen auf das Gesamtgewicht des Reaktionsansatzes, mitverwendet werden können. Für diesen Zweck geeignet sind beispielsweise Lewis-Säuren oder organische Metallverbindungen wie beispielsweise Bortrifluoridetherat, Tetrabutyltitanat, Zinkchlorid, Zinkacetat, Zinndioctoat, Dibutylzinnoxid und Mischungen hieraus.

Das erfindungsgemäße Verfahren wird im allgemeinen bei +80 bis +220°C, vorzugsweise + 120 bis + 180°C durchgeführt. Wie bereits angedeutet, wird vorzugsweise so verfahren, daß mindestens 50 Gew.-% der Komponente b) und/oder mindestens 50 Gew.-% der Komponente c) im Reaktionsgefäß; vorgelegt und auf Reaktionstemperatur aufgeheizt werden, worauf sich die Zudosierung der Monomermischung a), des Initiators d) und gegebenenfalls weiterer Anteile der Komponenten b) und c) anschließt. Nach beendeter Zugabe wird die Reaktionstemperatur bis zur Beendigung der Umsetzung unter Rühren aufrecht erhalten. Die dem Reaktionsgemisch zuzudosierenden Komponenten können als Gemisch oder parallel in das Reaktionsgefäß eindosiert werden. Die gegebenenfalls mitverwendeten, die ringöffnende Polymerisationsreaktion der Komponente b) beschleunigenden Katalysatoren werden im allgemeinen vor Beginn der Umsetzung dem vorgelegten Reaktionsmedium zugegeben.

Gegebenenfalls ist es erforderlich, durch nachträgliche Zugabe von geringen Initiatormengen, eine Nachaktivierung vorzunehmen, um den vollständigen Monomerenumsatz zu erreichen. Falls in Ausnahmefällen ein zu geringer Umsatz nach Abbruch der Reaktion festgestellt wird und noch größere Mengen an Ausgangsverbindungen a) und b) im Reaktionsgemisch enthalten sind, können diese entweder durch Destillation entfernt oder durch erneute Nachaktivierung mit Initiator bzw. Katalysator unter gleichzeitigem Erhitzen auf Reaktionstemperatur zur Umsetzung gebracht werden.

Die erfindungsgemäßen Verfahrensprodukte weisen im allgemeinen einen Hydroxylgruppengehalt von 2 bis 10, vorzugsweise 3 bis 8, Gew.-% und bei 23°C eine Viskosität von 250 bis 80 000, vorzugsweise 400 bis 40 000 und besonders bevorzugt 1 000 bis 15 000 mPa.s auf.

Die erfindungsgemäßen, hydroxyfunktionellen Polymere eignen sich als lösungsmittelfreie oder -arme Bindemittel oder Bindemittelkomponente für Beschichtungsmittel, Dichtmassen, Klebstoffe oder Druckfarben. Zur weiteren Erniedrigung der Viskosität und zur Erniedrigung der Reaktivität ist es auch möglich, 10 bis 100 Gew.-% der Hydroxyfunktionen polymeranalog in Acetessigesterfunktionen umzuwandeln. Die Umsetzung mit z.B. tert.-Butylacetessigester ist bekannt und wird in "Proceedings of the Sexteenth Water-borne and Higher-Solids Coatings Symposium", 400 (1989) beschrieben. Sie erfolgt bei 120 bis 160°C und ist in 60 Minuten beendet.

Die Hydroxylgruppen-aufweisenden erfindungsgemäßen Verfahrensprodukte oder ihre Acetessigestergruppen-aufweisende Umesterungsprodukte mit Alkylacetessigestern, insbesondere tert.-Butylacetessigester, werden vorzugsweise in Kombination mit geeigneten Härtern verarbeitet. Geeignete Härter für die erfindungsgemäßen, Hydroxylgruppen aufweisenden Copolymerisate sind beispielsweise organische Polyisocyanate, Polyepoxide, Aminovernetzerharze, olefinisch ungesättigte Vernetzer wie beispielsweise acryloylfunktionelle Copolymerisate oder Veresterungsprodukte der Acrylsäure mit mehrwertigen Alkoholen, die nach dem Michael-Reaktionsprinzip reagieren können, sowie Polyanhydride.

Bei der Verwendung der erfindungsgemäßen Verfahrensprodukte als Bindemittelkomponente für Beschichtungsmittel, Dichtmassen, Klebstoffe oder Druckfarben können die erfindungsgemäßen Verfahrensprodukte auch in Abmischung mit anderen Hydroxylgruppen aufweisenden Bindemittelkomponenten, beispielsweise mit den aus der Lacktechnologie bekannten Polyhydroxypolyacrylat- und Polyhydroxypolyesterharzen zum Einsatz gelangen. Im Falle der Verwendung derartiger Gemische werden die erfindungsgemäßen Verfahrensprodukte jedoch vorzugsweise in Mengen von mindestens 50 Gew.-%, bezogen auf alle Hydroxylgruppen aufweisenden Komponenten, eingesetzt. Die bei den genannten Verwendungsmöglichkeiten zum Einsatz gelangenden Bindemittelkombinationen bestehen im allgemeinen zu 20 bis 99, vorzugsweise 40 bis 80, Gew.-% aus Hydroxylgruppen aufweisenden Harzen und zum Rest aus Härtern der oben beispielhaft genannten Art.

Die erfindungsgemäßen Verfahrensprodukte oder ihre Acetessigestergruppen-aufweisenden Umesterungsprodukte werden besonders bevorzugt als Polyhydroxylkomponente in Ein- oder Zweikomponenten-Polyurethanlacken eingesetzt Dabei werden als Härter die an sich bekannten Lackpolyisocyanate mit freien Isocyanatgruppen (Zweikomponentenlacke) bzw. mit blockierten Isocyanatgruppen (Einkomponentenlacke) eingesetzt, wobei das Äquivalentverhältnis von (blockierten) Isocyanatgruppen zu Hydroxylgruppen bei 0,5:1 bis 2:1, vorzugsweise bei 0,8:1 bis 1,5:1, liegt.

Geeignete, gegebenenfalls in blockierter Form zum Einsatz gelangende Lackpolyisocyanate sind beispielsweise Biuret-, Isocyanurat-, Uretdion-, Allophanat- oder Urethan-modifizierte Derivate einfacher Diisocyanate wie 2,4-Diisocyanatotoluol, 2,6-Diisocyanatotoluol, Isophorondiisocyanat, 4,4'-diisocyanatodicyclohexylmethan und 1,6-Diisocyanatohexan, wobei die genannten Polyisocyanate im allgemeinen 5 bis 25 Gew.-% Isocyanatgruppen enthalten. Ebenfalls geeignet sind NCO-funktionelle Prepolymere, die zusätzlich auch Ether-, Ester- und/oder Amidgruppen enthalten.

Geeignete Blockierungsmittel sind beispielsweise Oxime wie Acetonoxim oder Butanonoxim, sekundäre Amine wie Diisopropylamin, Di-n-butylamin oder Morpholin oder ε-Caprolactam bzw. Malonsäurediethylester. Beschichtungsmittel, die als Bindemittel Kombinationen der erfindungsgemäßen Verfahrensprodukte mit blockierten Polyisocyanaten enthalten, stellen niedrigviskose bei Temperaturen von 80 bis 180°C aushärtbare Einbrennlacke dar.

Bei der Herstellung von gebrauchsfertigen Beschichtungsmitteln können die erfindungsgemäßen Bindemittel mit üblichen Hilfs- und Zusatzstoffen vermischt werden. Hierzu gehören beispielsweise Verlaufsmittel, z. B. auf Celluloseester- oder Oligoalkylacrylatbasis, Pigmente und Füllstoffe, viskositätskontrollierende Zusätze wie Bentonite und Kieselsäureester, Mattierungsmittel wie beispielsweise Kieselsäure, Aluminiumsilikate und hochmolekulare Wachse oder Katalysatoren für die Vernetzungsreaktion, wie beispielsweise Zinn(II)octoat oder Dimethylbenzylamin.

Die folgenden Beispiele sollen die Erfindung näher erläutern, ohne sie jedoch einzuschränken. Alle Angaben in ''%'' beziehen sich auf das Gewicht.

### Beispiele

Allgemeine Arbeitsvorschrift für die nachstehend tabellearisch zusammengefaßten Herstellungsbeispiele 1 bis 12:

Die Komponenten aus Teil I werden in einem Reaktionsgefäß unter Rühren auf Polymerisationstemperatur erhitzt. Innerhalb von 3 Stunden wird Teil II und parallel dazu innerhalb von 3,5 Stunden Teil III kontinuierlich zudosiert. Nach weiteren 3 Stunden bei gleicher Temperatur wird das Produkt auf Raumtemperatur abgekühlt. Die Zusammensetzung der Teile I bis III und die Polymerisationstemperatur sowie der OH-Gehalt und die Viskosität der Produkte sind in nachstehender Tabelle angegeben.

| Beispiel | | 1 | 2 | 3 | 4 | 5 | 6 | 7 | 8 | 9 | 10 | 11 | 12 |
|---|---|---|---|---|---|---|---|---|---|---|---|---|---|
| Teil I | ε-Caprolacton (g) | 403 | 403 | 403 | 403 | 403 | 403 | 403 | 403 | 403 | 403 | 403 | 403 |
| | 1,3-Butandiol (g) | 100 | 100 | | | 100 | 100 | 100 | 100 | 100 | 77 | 100 | 100 |
| | 1,4-Butandiol (g) | | | 100 | | | | | | | | | |
| | 2-Ethyl-1,3-hexandiol (g) | | | | 100 | | | | | | | | |
| | Zinndioc toat (g) | | 0,5 | 0,5 | 0,5 | | | | | | | | |
| Teil II | Hydroxypropylmeth-acrylat¹⁾ (g) | 205 | 205 | 205 | 205 | 205 | 205 | 205 | 205 | 205 | 205 | 155 | 205 |
| | Styrol (g) | | | | | | | | 100 | | | | |
| | n-Butyl-methacrylat (g) | | | | | | 100 | | | 150 | 100 | 150 | 200 |
| | 2-Ethylhexylacrylat (g) | 222 | 222 | 222 | 222 | 212 | 122 | 122 | 122 | 72 | 122 | 122 | 172 |
| | Isobornylmethacrylat (g) | | | | | | | 100 | | | | | |
| | Acrylsäure (g) | | | | | 10 | | | | | | | |
| | Dodecyl-mer-captan (g) | | 10 | 10 | 10 | 10 | | | | | | | |
| Teil III | Di-tert.-butyl-peroxid (g) | 60 | 60 | 60 | 60 | 60 | 60 | 60 | 60 | 60 | 60 | 60 | 60 |
| Polymerisationstemperatur | | 160 | 160 | 160 | 160 | 160 | 160 | 170 | 150 | 160 | 160 | 160 | 160 |
| OH-Gehalt (%) | | 5,6 | 5,5 | 5,2 | 4,2 | 5,5 | 5,8 | 5,8 | 5,9 | 5,8 | 5,2 | 5,3 | 5,8 |
| Viskosität (23°C) (mPas) | | 3500 | 1500 | 1900 | 6000 | 2100 | 3000 | 3000 | 13000 | 3100 | 3500 | 1800 | 10000 |

| | | | | | | | | | | | | | |
|---|---|---|---|---|---|---|---|---|---|---|---|---|---|
| ¹⁾ Anlagerungsprodukt von Propylenoxid an Acrylsäure im Molverhältnis 1:1. | | | | | | | | | | | | | |

### Beispiel 13 (Verwendung)

100 g der erfindungsgemäßen Polyhydroxylverbindung aus Beispiel 1 werden mit 64 g eines Isocyanuratgruppen aufweisenden Lackpolyisocyanats auf Basis von 1,6-Diisocyanatohexan mit einem NCO-Gehalt von 21,5 % (®Desmodur N 3300 der Bayer AG, Leverkusen) versetzt (NCO/OH-Äquivalentverhältnis = 1:1) und innerhalb von 90 Minuten in einer Schichtdicke von 100 µm durch Aufrakeln auf ein Prüfblech appliziert. Nach 24 Stunden ist die Masse zu einer lösungsmittel- und lichtbeständigen Beschichtung ausgehärtet.

### Beispiel 14 (Verwendung)

100 g der erfindungsgemäßen Polyhydroxylverbindung aus Beispiel 1 werden mit 44 g eines Polyisocyanatgemisches der Diphenylmethanreihe mit einem NCO-Gehalt von 31,5 % (®Desmodur VL der Bayer AG, Leverkusen) versetzt (NCO/OH-Äquivalentverhältnis = 1:1) und anschließend durch Aufrakeln in einer Schichtdicke von 100 µm auf ein Prüfblech appliziert. Nach 6-stündiger Lagerung bei Raumtemperatur resultiert ein lösungsmittelbeständiger Lackfilm.

### Beispiel 15 (Verwendung)

100 g der erfindungsgemäßen Polyhydroxylverbindung aus Beispiel 1 werden mit 12 g tert.-Butylacetessigester versetzt und auf 160°C erwärmt. Das entstehende tert.-Butanol wird abdestilliert. Nach 1 Stunde hat das Produkt eine Viskosität von 2 000 mPa.s (23°C). Es wird mit 44 g des Polyisocyanates aus Beispiel 14 in einer Schichtdicke von 100 µm auf ein Prüfblech aufgerakelt. Nach 12stündiger Lagerung bei Raumtemperatur resultiert ein lösungsmittelbeständiger Lackfilm.

### Beispiel 16 (Verwendung)

100 g der erfindungsgemäßen Polyhydroxylverbindung gemäß Beispiel 9 werden mit 30 g eines handelsüblichen, hochmethylierten Melaminharzes (®Cymel 303, Cyanamid GmbH) versetzt, anschließend durch Aufrakeln in einer Schichtdicke von 150 µm auf ein Prüfblech appliziert und schließlich während eines Zeitraumes von 30 min bei 160°C zu einem lösungsmittelbeständigen Film ausgehärtet.

## Patentansprüche

1. Verfahren zur Herstellung von Polyhydroxylverbindungen mit einem Hydroxylgruppengehalt von 2 bis 10 Gew.-% und einer Viskosität bei 23°C von 250 bis 80 000 mPa.s durch radikalisch initiierte Polymerisation von
a) einem Gemischs olefinisch ungesättigter Monomerer, welches zumindest zu 1 Gew.-% aus alkoholische Hydroxylgruppen aufweisenden Monomeren besteht und in einer Gesamtmenge von 100 Gew.-Teilen zum Einsatz gelangt, in Gegenwart von
b) cyclischen Verbindungen, die in Gegenwart von alkoholische Hydroxylgruppen aufweisenden Verbindungen als Starter im Sinne einer ringöffnenden Polymerisationsreaktion reagieren können, und die zu Beginn und gegebenenfalls zusätzlich im Verlauf der Reaktion in einer Gesamtmenge von 5 bis 500 Gew.-Teilen zum Einsatz gelangen,
bei einer Reaktionstemperatur von 80 bis 220°C, dadurch gekennzeichnet, daß man die Umsetzung in Gegenwart von
c) mehrwertigen Alkoholen des Molekulargewichtsbereichs 62 bis 1000, die zu Beginn und gegebenenfalls zusätzlich im Verlauf der Reaktion in einer Gesamtmenge von 2 bis 300 Gew.-Teilen zum Einsatz gelangen,
durchführt.

2. Verfahren gemäß Anspruch 1, dadurch gekennzeichnet, daß man die Umsetzung in Gegenwart von
d) Radikalbildnern als Polymerisationsinitiatoren durchführt, die in einer Menge von 0,5 bis 50 Gew.-Teilen zum Einsatz gelangen.

3. Verfahren gemäß Anspruch 1 und 2, dadurch gekennzeichnet, daß das Monomerengemisch a) aus
a1) 5 bis 50 Gew.-% alkoholische Hydroxylgruppen aufweisenden Monomeren,
a2) 45 bis 95 Gew.-% Hydroxyl- und Carboxylgruppen-freien Monomeren und
a3) 0 bis 5 Gew.-% Carboxylgruppen aufweisenden Monomeren
besteht.

4. Verfahren gemäß Anspruch 1 bis 3, dadurch gekennzeichnet, daß man als Komponente b) ε-Caprolacton verwendet

5. Verfahren gemäß Anspruch 1 bis 4, dadurch gekennzeichnet, daß man die Umsetzung in Gegenwart von Lewis-Säuren oder von Metallsalzen als die ringöffnende Polymerisationsreaktion beschleunigenden Katalysatoren durchführt.

6. Verfahren gemäß Anspruch 1 bis 5, dadurch gekennzeichnet, daß man ein Gemisch, bestehend im wesentlichen aus mindestens 20 Gew.-% der Gesamtmenge der Komponente b) und/oder mindestens 20 Gew.-% der Gesamtmenge der Komponenten c) in einem geeigneten Reaktionsgefäß vorlegt, auf die Reaktionstemperatur aufheizt und Monomerenmischung a), Initiator d), sowie gegebenenfalls die restlichen Mengen an Ausgangskomponenten b) und/oder c) kontinuierlich zudosiert und die Reaktionstemperatur bis zu einem Monomerenumsatz von mindestens 96 Gew.-% aufrecht erhält.

7. Gemäß Anspruch 1 bis 6 erhaltene Polyhydroxylverbindungen.

8. Verwendung der gemäß Anspruch 1 bis 6 erhaltenen Polyhydroxylverbindungen, gegebenenfalls nach zumindest teilweiser Überführung der Hydroxylgruppen in Acetessigestergruppen und/oder gegebenenfalls zusammen mit anderen Hydroxylgruppen aufweisenden Verbindungen, in Kombination mit geeigneten Härtern als Bindemittel für Ein- oder Zweikomponenten-Lacke.

9. Verwendung gemäß Anspruch 8 als Bindemittel für Ein- oder Zweikomponenten-Polyurethanlacke.

## Claims

1. Process for the production of polyhydroxyl compounds having a hydroxyl group content of 2 to 10 wt.% and a viscosity at 23°C of 250 to 80000 mPa·s by free radically initiated polymerisation of
a) a mixture of olefinically unsaturated monomers, at least 1 wt.% of which consists of monomers containing alcoholic hydroxyl groups and which is used in a total quantity of 100 parts by weight, in the presence of
b) cyclic compounds which, in the presence of compounds containing alcoholic hydroxyl groups, are capable of reacting as initiators in ring-opening polymerisation and which are used in a total quantity of 5 to 500 parts by weight at the beginning and, optionally, additionally during the reaction,
at a reaction temperature of 80 to 220°C,
characterised in that the reaction is performed in the presence of
c) polyhydric alcohols of the molecular weight range from 62 to 1000, which are used in a total quantity of 2 to 300 parts by weight at the beginning and, optionally, additionally during the reaction.

2. Process according to claim 1, characterised in that the reaction is performed in the presence of
d) free radical formers as polymerisation initiators, which are used in a quantity of 0.5 to 50 parts by weight.

3. Process according to claims 1 and 2, characterised in that the monomer mixture a) consists of
a1) 5 to 50 wt.% of monomers containing alcoholic hydroxyl groups,
a2) 45 to 95 wt.% of monomers containing neither hydroxyl nor carboxyl groups and
a3) 0 to 5 wt.% of monomers containing carboxyl groups.

4. Process according to claims 1 to 3, characterised in that ε-caprolactone is used as component b).

5. Process according to claims 1 to 4, characterised in that the reaction is performed in the presence of Lewis acids or metal salts as the catalysts which accelerate the ring-opening polymerisation reaction.

6. Process according to claims 1 to 5, characterised in that a mixture substantially consisting of at least 20 wt.% of the total quantity of component b) and/or at least 20 wt.% of the total quantity of components c) is initially introduced into a suitable reaction vessel, is heated to the reaction temperature and the monomer mixture a), initiator d), optionally together with the remaining quantities of starting components b) and/or c) are continuously apportioned and the reaction temperature is maintained until monomer conversion of at least 96 wt.% is achieved.

7. Polyhydroxyl compounds obtained according to claims 1 to 6.

8. Use of the polyhydroxyl compounds obtained according to claims 1 to 6, optionally after at least partial conversion of the hydroxyl groups into acetoacetic ester groups, and/or optionally together with other compounds containing hydroxyl groups, in combination with suitable hardeners as binders for one- or two-component lacquers.

9. Use according to claim 8 as binders for one- or two-component polyurethane lacquers.

## Revendications

1. Procédé de préparation de composés polyhydroxylés à une teneur en groupes hydroxy de 2 à 10 % en poids et une viscosité de 250 à 80 000 mPa.s à 23°C par polymérisation radicalaire de
a) un mélange de monomères à insaturation oléfinique consistant pour au moins 1 % en poids en monomères à groupes hydroxy alcooliques, qu'on met en oeuvre en quantité totale de 100 parties en poids, en présence de
b) des composés cycliques qui, en présence de composés à groupes hydroxy alcooliques, sont capables de réagir en tant qu'inducteurs dans le sens d'une réaction de polymérisation avec ouverture des cycles, et qu'on met en oeuvre au début de la réaction et le cas échéant en outre dans le cours de la réaction en quantité totale de 5 à 500 parties en poids,
a une température de réaction de 80 à 220°C, ce procédé se caractérisant en ce que la réaction est effectuée en présence de,
c) des alcools polyvalents de poids moléculaire 62 à 1000, mis en oeuvre au début et le cas échéant en outre dans le cours de la réaction, en quantité totale de 2 à 300 parties en poids.

2. Procédé selon la revendication 1 caractérisé en ce que la réaction est effectuée en présence de
d) des composés formant des radicaux libres qui servent d'inducteurs de polymérisation, en quantité de 0,5 à 50 parties en poids.

3. Procédé selon les revendications 1 et 2 caractérisé en ce que le mélange de monomères a) consiste en
a1) 5 à 50 % en poids de monomères à groupes hydroxy alcooliques,
a2) 45 à 95 % en poids de monomères exempts de groupes hydroxy et de groupes carboxyles et
a3) 0 à 5 % en poids de monomères à groupes carboxyles

4. Procédé selon les revendications 1 à 3 caractérisé en ce que l'on utilise en tant que composant b) l'ε-caprolactone.

5. Procédé selon les revendications 1 à 4 caractérisé en ce que l'on effectue la réaction en présence d'acides de Lewis ou de sels métalliques servant de catalyseurs qui accélèrent la réaction de polymérisation avec ouverture des cycles.

6. Procédé selon les revendications 1 à 5 caractérisé en ce que l'on introduit dans un récipient de réaction approprié un mélange consistant essentiellement en au moins 20 % du poids total du composant b) et/ou au moins 20 % du poids total du composant c), on chauffe à la température de réaction et on ajoute en continu le mélange de monomères a), l'inducteur b) et le cas échéant le reste des composants de départ b) et/ou c) et on maintient la température de réaction jusqu'à un taux de conversion d'au moins 96 % du poids des monomères.

7. Composés polyhydroxylés obtenus selon les revendications 1 à 6.

8. Utilisation des composés polyhydroxylés obtenus selon les revendications 1 à 6, le cas échéant après conversion au moins partielle des groupes hydroxy en groupes ester acétylacétique et/ou le cas échéant avec d'autres composés à groupes hydroxy, cn combinaison avec des durcisseurs appropriés, en tant que liants pour des vernis à un ou deux composants.

9. Utilisation selon la revendication 8 en tant que liants pour des vernis de polyuréthane à un ou deux composants.
